# EUROPEAN PATENT SPECIFICATION

(11) **EP 3 057 020 B1**
(45) Date of publication and mention of the grant of the patent: **20.02.2019**
(21) Application number: 15853303.4
(22) Date of filing: 06.03.2015
(51) Int. Cl.: G06F 21/12, G06F 21/14, H04L 29/06, H04W 12/04

(54) **USER TERMINAL AND METHOD FOR PROTECTING CORE CODE USING NEIGHBORING DEVICE OF SAME**
BENUTZERENDGERÄT UND VERFAHREN ZUM SCHUTZ EINES KERNCODES MITHILFE EINER BENACHBARTEN VORRICHTUNG DAVON
TERMINAL UTILISATEUR ET PROCÉDÉ DE PROTECTION D'UN CODE DE BASE À L'AIDE D'UN DISPOSITIF VOISIN DE CELUI-CI

(30) Priority: 21.10.2014 KR 20140142689; 08.01.2015 KR 20150002942
(43) Date of publication of application: 17.08.2016
(73) Proprietor: Soongsil University Research Consortium Techno-Park, Seoul 156-743 (KR)
(72) Inventor: YI, Jeong Hyun, Gyeonggi-do 463-730 (KR); PARK, Yong Jin, Seoul 143-827 (KR)
(74) Representative: Roos, Peter
(86) International application number: PCT/KR2015/002205
(87) International publication number: WO 2016/064043

(56) References cited:
- EP-A1- 2 264 635
- JP-A- 2008 527 905
- KR-A- 20120 002 079
- KR-A- 20140 089 321
- KR-B1- 101 223 981
- US-A1- 2013 145 477

## Description

### [Technical Field]

The present invention relates to a method for protecting core codes using a user terminal or a peripheral device of the user terminal. More particularly, the present invention relates to a core code protective method using a user terminal and a peripheral device of the user terminal which are capable of protecting core codes of an application program against reverse engineering attacks.

### [Background Art]

A smart phone user can use various services by downloading and executing applications and contents which are developed by a third party and uploaded through digital open markets, such as Goggle Play, etc. In this case, a lot of data are stored in a smart phone. There may be very sensitive or important information in the stored data, so security technologies for protecting the information stored in the smart phone have been developed.

Various data including financial information and personal information stored in the smart phone may be captured through any forged application as well as phishing, pharming and smishing. Some attackers execute reverse engineering for the application to extract decompiled source codes and create a forged application by inserting a malicious code. In some cases, they may obtain financial profits by illegally using the forcibly extracted source codes.

In particular, Android applications may be more easily extracted and analyzed than iPhone applications, and therefore has been mainly targeted from hacking attackers who insert the malicious codes through illegal copy or falsification of the application.

Various source obfuscation techniques and Goggle LVL(licensing verification library) have been proposed to prevent the application from being illegally copied and forged. Practically, in those techniques, time for analyzing the application increases, or it is difficult to execute the reverse engineering.

However, to heighten a difficulty level of the reverse engineering can't become a basic solution for preventing the reverse engineering attack. Accordingly, to protect the application and user's information, a technology which makes extraction and analysis of the application source codes impossible is required as the basic solution.

The background art of the present invention is disclosed in the Korean Patent No. 10-1223981 on January 21, 2013.

US2013145477 discloses a content reproduction system including an information processing terminal and a secure device. The information processing terminal receives a copyright protection application program from an application distribution server. The copyright protection application program includes a first program having a first execution format executable in the information processing terminal and a second program having a second execution format different from the first execution format and executable in the secure device. The second program is encrypted with a program key held in the secure device. By extracting and executing the first program, the information processing terminal extracts the second program and transmits the second program to the secure device. The secure device receives the second program from the information processing terminal, decrypts the second program using a program key stored in a key storing unit, and executes the second program.

EP2264635 discloses a software application is protected against reverse engineering by executing it on two separate processors, a main processor and a secure processor. The main processor calls the secure processor to have specific blocks of code executed; preferably, a unique command is used for each call, thereby making it more difficult to reverse engineer the application. The command parameters are preferably more than needed, letting the secure processor pick out the ones that are necessary; the same may be done for the response.

### [Disclosure]

### [Technical Problem]

The present invention has been made in an effort to provide a core code protective method using a user terminal and a peripheral device of the user terminal which are capable of protecting core codes of an application program against reverse engineering attacks.

### [Technical Solution]

The invention is defined by the scope of the appended claims.

### [Advantageous Effects]

According to the present invention, core codes are stored in a user terminal and a peripheral device paired with the user terminal, and a CPU of the peripheral device executes the core codes so that the core codes can't be exposed through the user terminal, thereby increasing resistance for reverse engineering analysis of an application program.

In addition, the core codes are encoded by using unique information of the user terminal, and then stored in the peripheral device. Therefore, even if a user loses either the user terminal or the peripheral device, a finder can't execute the corresponding application program and thus it is impossible to use the application program with a bad purpose.

### [Description of Drawings]

FIG. 1 is a schematic diagram of a core code protective system according to an exemplary embodiment of the present invention.
FIG. 2 is a block diagram showing a structure of a user terminal according to the exemplary embodiment of the present invention.
FIG. 3 is a block diagram showing a structure of a peripheral device of the user terminal according to the exemplary embodiment of the present invention.
FIG. 4 is a flow chart showing a method for protecting the core code according to the exemplary embodiment of the present invention.

### [Best Mode]

The present invention will be described more fully hereinafter with reference to the accompanying drawings, in which exemplary embodiments of the invention are shown. The drawings and description are to be regarded as illustrative in nature and not restrictive, and like reference numerals designate like elements throughout the specification.

Hereinafter, an exemplary embodiment of the present invention will be described in detail with reference to the accompanying drawings.

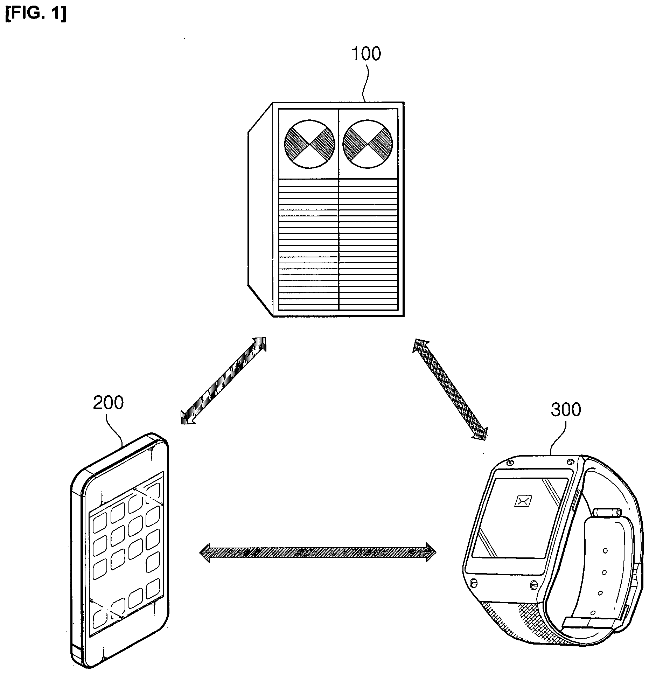

FIG. 1 is a schematic diagram of a core code protective system according to an exemplary embodiment of the present invention. Referring to FIG. 1, the core code protective system according to the exemplary embodiment of the present invention includes an application program store server 100, a user terminal 200, and a peripheral device 300.

As shown in FIG. 1, the application program store server 100, the user terminal 200 and the peripheral device 300 are connected through a network. In detail, as shown in FIG. 1, the user terminal 200 is connected to the application program store server 100 and the peripheral device 300 through the network, and the peripheral device 300 is connected to the application program store server 100 through the network.

The network has a connection structure that is capable of exchanging information between nodes, such as user terminals, servers, and so forth. Examples of the network include Internet, LAN (local area network), wireless LAN, WAN (wide area network), PAN (personal area network), 3G, 4G, and Wi-Fi, but the present invention is not necessarily limited thereto.

Particularly, the user terminal 200 and the peripheral device 300 may be wirelessly connected to each other through Bluetooth, Zigbee, IrDA (infrared data association), but they may be also connected by wires.

Firstly, the application program store server 100 classifies application program files into core codes and general codes, and then transmits the core codes and general codes to the peripheral device 300 and the user terminal 200.

The application program store server 100 may determine the core codes through an executable file which is decompiled from an application program package. In addition, the application program store server 100 creates the general codes by eliminating the core codes in the application program files. In this case, the general codes and core codes may be executable files which are respectively installed on the user terminal 200 and the peripheral device 300.

The application program store server 100 according to the exemplary embodiment of the present invention may store the general codes and core codes of various application programs related to finance, news, shopping, games, etc, and the user terminal 200 and the peripheral device 300 may download the general codes and core codes of the application programs from the application program store server 100 and install them. The application program store server 100 may be a mobile application market, and various mobile application markets such as Goggle Play and Apple App Store may be used as the application program store server 100.

Next, the user terminal 200 receives the general codes of the application program from the application program store server 100, and then installs the received general codes. Then, when the application program is first executed, the user terminal 200 transmits its unique information to the peripheral device 300 paired therewith so that the peripheral device 300 encodes the core codes by using the unique information. When the application program is executed again, the user terminal 200 receives an execution result of the core codes from the peripheral device 300, and applies the execution result when the application program is executed or outputs the execution result.

The user terminal 200 is a terminal capable of installing and executing the application program, and a smart phone, a smart pad, a mobile phone, a notebook computer, a tablet PC, a PDA (personal digital assistant), etc. may be used as the user terminal 200. In particular, in the case of the smart phone or smart pad, the application program may be installed as an application on the terminal.

In this case, the application is an application program installed on a terminal. For example, an app running on a mobile terminal such as a smart phone is included in such an application. A user can install the app on the user terminal 200 such as the smart phone by downloading it from a mobile application market which is a virtual market where mobile contents may be freely bought and sold.

Lastly, the peripheral device 300 receives the core codes of the application program from the application program store server 100, and then stores the received core codes. In addition, the peripheral device 300 receives the unique information from the user terminal 200 paired therewith, and encodes the core codes. Then, when the application program installed on the user terminal 200 is executed again and the unique information of the user terminal 200 and an execution-calling message are transmitted from the user terminal 200, the peripheral device 300 executes the core codes which are decoded by using the unique information of the user terminal 200, and transmits an execution result of the core codes to the user terminal 200.

In this case, the peripheral device 300 may display the execution result of the core codes on a screen through an output unit (not shown), or may output it in the form of sound.

The peripheral device 300 is an electronic device which may receive and store the core codes of the application program, communicating with the user terminal 200 and the application program store server 100. In addition, the peripheral device 300 includes a CPU (central processing unit) capable of executing the core codes of the application program. The peripheral device 300 may be a wearable device, such as a smart watch, smart glasses, and a smart band.

In addition, appcessories, such as an activity tracker, a mobile photo printer, a home-monitoring device, a toy, and a medical device may be also used as the peripheral device 300. The appcessories are accessories that can expand functions of the smart phone which may be used as the user terminal 200 by interlocking with applications of the smart phone.

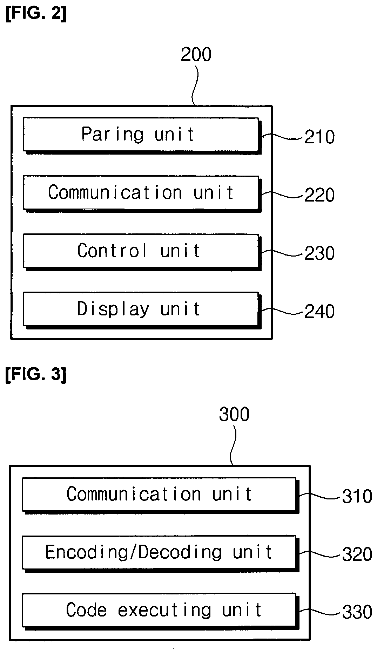

FIG. 2 is a block diagram showing a structure of the user terminal according to the exemplary embodiment of the present invention.

Referring to FIG. 2, the user terminal 200 according to the exemplary embodiment of the present invention includes a pairing unit 210, a communication unit 220, a control unit 230, and a display unit 240.

The pairing unit 210 communicates with the application program store server 100 and the peripheral device 300. In particular, the pairing unit 210 may communicate with the application program store server 100 through wireless communication such as Wi-Fi, 3G, 4G, LTE, and Wibro, while communicating with the peripheral device 300 through local communication such as Bluetooth, Zigbee, and infrared rays (IR), or wired communication.

In addition, the pairing unit 210 receives the general codes of the application program from the application program store server 100, installs the corresponding application program on the user terminal 200, and performs pairing with the peripheral device 300 to which the core code files of the application program has been transmitted from the application program store server 100.

The communication unit 220 transmits the unique information of the user terminal 200 to the peripheral device 300. The unique information of the user terminal 200 may include IMEI (International Mobile Equipment Unique) of the user terminal 200. The communication unit 220 may transmit the unique information of the user terminal 200 to the peripheral device 300 through local communication such as Bluetooth, Zigbee, and infrared rays (IR), or wired communication.

The control unit 230 transmits an execution-calling message including information of the core codes which should be called while the general codes are executed, to the peripheral device 300, and receives an execution result of the core codes of the corresponding application program from the peripheral device 300. In this case, the control unit 230 may transmit the execution- calling message and receive the execution result of the core codes through local communication such as Bluetooth, Zigbee, and infrared rays (IR), or wired communication.

The display unit 240 outputs the execution result of the core codes transmitted from the peripheral device 300 on a screen. In addition, the display unit 240 may output the execution result of the core codes so that the user can recognize the execution result with optical, auditory, and tactile sensations.

FIG. 3 is a block diagram showing a structure of the peripheral device according to the exemplary embodiment of the present invention.

Referring to FIG. 3, the peripheral device 300 includes a communication unit 310, an encoding/decoding unit 320, and a code-executing unit 330.

The communication unit 310 performs communication between the application program store server 100 and the user terminal 200. Particularly, the communication unit 310 may communicate with the user terminal 200 through local communication such as Bluetooth, Zigbee, and infrared rays (IR), or wired communication.

In addition, the communication unit 310 installs the core codes of the application program transmitted from the application program store server 100 on the peripheral device 300, and receives the unique information of the user terminal 200 and the execution-calling message from the user terminal 200 when the application program is executed.

The encoding/decoding unit 320 encodes the core codes by using the unique information received from the user terminal 200 after the application program is first executed, and then stores the encoded core codes. Then, when the application program is executed again, the encoding/decoding unit 320 decodes the encoded core codes by using the unique information of the user terminal 200 which has been transmitted from the user terminal 200.

Lastly, the code-executing unit 330 loads and executes the core codes when the execution-calling message is transmitted thereto from the user terminal 200, and then transmits the execution result of the core codes to the user terminal 200.

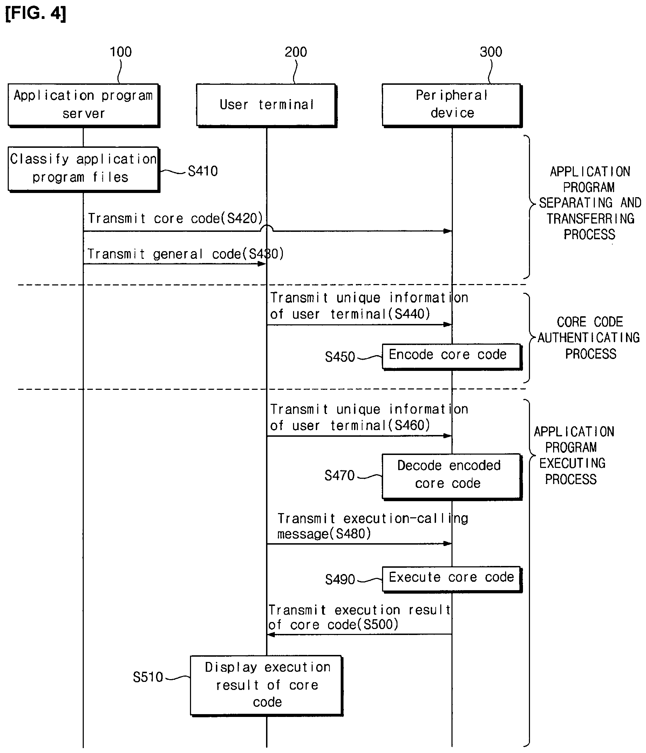

Hereinafter, a method for protecting the core codes by using the peripheral device according to the exemplary embodiment of the present invention will be described in further detail with reference to FIG. 4.

FIG. 4 is a flow chart showing the method for protecting the core codes according to the exemplary embodiment of the present invention.

As shown in FIG. 4, in the method for protecting the core codes by using the peripheral device, S410 to S430 are steps in which the application program is classified and then transmitted, S440 and S450 are steps in which the core codes are encoded, and S460 to S490 are steps in which the application program is executed. For better understanding and ease of description, the method will be described with three simplified steps.

Firstly, the application program store server 100 performs classification and transmission of the application program at steps S410 to S430.

In detail, at step S410, the application program store server 100 classifies files of the application program into the core codes and general codes in which the core codes are not included. The application program store server 100 determines the core codes through an executable file which is decompiled from an application program package. In addition, in this step, the application program store server 100 creates the general codes by eliminating the core codes from the application program file.

Then, at step S420, the application program store server 100 transmits the core codes to the peripheral device 300 and the peripheral device 300 stores the core codes. In this case, the application program store server 100 may transmit the core codes to the peripheral device 300 through wireless communication such as Wi-Fi, 3G, 4G, LTE, Wibro, etc. In order to enhance security, the application program store server 100 may transmit the core codes through local communication or wired communication.

Then, at step S430, when the user accesses the application program store server 100 through the user terminal 200, the application program store server 100 transmits the general codes to the user terminal 200 by using a download method. The user terminal 200 may download and install the general codes of the application program to be installed by using a network such as 3G, 4G, Wi-Fi, etc.

After the classification and transmission of the application program have been completed, two steps S440 and S450 which will be described later in detail are performed to encode the core codes if the user requests that the application program installed on the user terminal 200 should be first executed. Alternately, if the user requests that the application program should be re-executed, steps S460 to S510 which will be described later in detail are performed to re-execute the application program.

In the case in which the application program installed on the user terminal 200 is requested to be first executed, the user terminal 200 performs paring with the peripheral device 300 before the core codes are encoded. The user terminal 200 performs paring with the peripheral device 300 sold in a state in which the core codes had been already stored. The user terminal 200 may also perform paring with other peripheral device 300 which has been owned by the user if the corresponding peripheral device 300 receives the core codes from the application program store server 100 and stores the received core codes.

For better understanding and ease of description, it has been described that pairing connection between the user terminal 200 and the peripheral device 300 is performed during the step of decoding the core codes, but the present invention is not necessarily limited thereto. For example, the paring connection between the user terminal 200 and the peripheral device 300 may be performed during the steps of classifying and transmitting the application program.

After the paring connection between the user terminal 200 and the peripheral device 300 has been completed, the user terminal 200 transmits its unique information to the peripheral device 300 at step S440. The unique information of the user terminal 200 may include IMEI (International Mobile Equipment Identity) of the user terminal 200.

The IMEI is a unique identity number allocated to each mobile phone. According to guidelines of GSMA (global system for mobile communications association), mobile phone manufacturers give the IMEI to each mobile phone when each phone is marketed. The IMEI includes 15 digits in total including 8-digit portion of registered code, 6-digit portion of model serial number, and a check digit, and IMEI management is classified into a blacklist system and a whitelist system. The IMEI is managed to cut off call of a lost or stolen phone.

In addition, at step S440, the user terminal 200 may transmit identity information of the application program, which should be encoded, together with its unique information. The peripheral device 300 may store the core codes of a plurality of application programs, and may find the core codes of the application program among the stored core codes by using the identity information of the application program which has been transmitted from the user terminal 200.

At step S450, the peripheral device 300 encodes the core codes of the application program which have been received and stored at step S420. The peripheral device 300 encodes the application program corresponding to the identity information of the corresponding application program by using the unique information of the user terminal 200 which has been received at step S440.

For better understanding and ease of description, it has been described that the peripheral device 300 encodes the core codes by using the unique information of the user terminal 200, but the present invention is not necessarily limited thereto. For example, at step S420, the application program store server 100 may receive the unique information of the user terminal 200 from the user terminal 200, encode the core codes, and then transmit the encoded core codes to the peripheral device 300. In this case, two steps S440 and S450 are omitted.

The core code protective system according to the exemplary embodiment of the present invention utilizes the IMEI for encoding the core codes and/or decoding the encoded core codes. The peripheral device 300 subordinates the encoded core codes stored in the peripheral device 300 to the user terminal 200 by encoding or decoding the core codes with the IMEI.

Next, on receiving an application program re-execution request, the user terminal 200 and the peripheral device 300 execute the application program again at steps S460 to S500.

In detail, the user terminal 200 transmits its unique information to the peripheral device 300 at step S460. The unique information of the user terminal 200 may include the IMEI, and the user terminal 200 may transmit the identity information of the application program requested to be re-executed by the user to the peripheral device 300, together with its unique information.

Then, at step S470, the peripheral device 300 decodes the encoded core codes corresponding to the received identity information of the application program by using the received unique information of the user terminal 200. The core codes encoded by using the unique information of the user terminal 200 at step S450 are subordinated to the user terminal 200 which has transmitted its unique information at step S440. Therefore, although anyone accidentally picks up the peripheral device 300 in which the core codes of the user terminal 200 has been stored, his terminal can't decode the corresponding core code files.

Next, the user terminal 200 transmits the execution-calling message to the peripheral device at step S480. For better understanding and ease of description, it has been described that the user terminal 200 transmits the execution-calling message to the peripheral device 300, but the present invention is not necessarily limited thereto. For example, the user terminal 200 may transmit the execution-calling message to the peripheral device 300 at step 460 together with its unique information.

The execution-calling message is a message requesting the peripheral device 300 to execute the core codes of the application program stored therein, and includes the identity information of the corresponding application program and information on an execution-calling file or function.

Next, at step S490, the peripheral device 300 executes the core code corresponding to the execution-calling message received from the user terminal 200 among the decoded core codes.

In the case in which the execution-calling message which the user terminal 200 has transmitted to the peripheral device 300 at step S480 includes the name of a particular function to be executed, the peripheral device 300 loads and executes the corresponding function.

In the step of classifying and transmitting the application program, the general codes which are transmitted to the user terminal 200 from the application program store server 100 at the step S430 may be a main routine type, while the core codes which are transmitted to the peripheral device 300 from the application program store server 100 and stored in the peripheral device 300 at step S420 may be a sub routine type.

When the user terminal 200 executes the general codes in response to the application program execution request inputted by the user, the general codes of the main routine call the core codes of the sub routine so that the peripheral device 300 may execute the core codes which have been decoded at step S470. In other words, the user terminal 200 transmits the execution-calling message to the peripheral device 300 by executing the general codes, so that the core codes stored in the peripheral device 300 are executed.

Then, the peripheral device 300 transmits the execution result of the core codes of the application program to the user terminal 200 at step S500, and the user terminal 200 displays the received execution result on the screen at step 510.

For better understanding and ease of description, it has been described that the user terminal 200 displays the execution result of the core codes which are transmitted from the peripheral device 300, but the present invention is not necessarily limited thereto. For example, in the case in which the peripheral device 300 has an output unit (not shown), the peripheral device 300 may directly output the execution result of the core codes through the output unit thereof, omitting two steps S500 and S510.

In this case, the peripheral device 300 doesn't transmit the execution result of the core codes to the user terminal 200, and the user checks contents outputted from the peripheral device 300 and inputs the outputted contents to the user terminal 200 to execute the application program.

As described above, in the core code protective system by using the user terminal and the peripheral device paired therewith according to the exemplary embodiment of the present invention, the core codes are stored in the user terminal and the peripheral device paired with the user terminal, and the CPU of the peripheral device executes the core codes so that the core codes can't be exposed through the user terminal, thereby increasing resistance for reverse engineering analysis of the application program.

Moreover, according to the present invention, the core codes are encoded by using the unique information of the user terminal, and then stored in the peripheral device. Therefore, even if the user loses either the user terminal or the peripheral device, a finder can't execute the corresponding application program and thus it is impossible to use the application program with a bad purpose.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A system comprising a user terminal (200) and a peripheral device (300),
wherein the user terminal (200) comprises:
a pairing unit (210) configured to receive a general code of an application program when the application program downloaded from an application program store server (100) is installed, and to perform pairing connection with the peripheral device (300) in which a core code of the application program transmitted from the application program store server (100) is stored;
a communication unit (220) configured to transmit unique information of the user terminal (200) to the paired peripheral device (300) when a request for execution of the application program is inputted; and
a control unit (230) configured to transmit an execution-calling message to the peripheral device (300) and to receive an execution result of the core code from the peripheral device (300),
wherein the peripheral device (300) is configured to encode the core code by using the unique information of the user terminal (200) when a request for execution of the application program is first inputted, and to store the encoded core code, and
wherein the peripheral device (300) is configured to decode the encoded core code by using unique information of the user terminal (200) when a request for re-execution of the application program is inputted, to execute the decoded core code, and to transmit an execution result of the decoded core code to the user terminal (200).

2. The system of claim 1, the user terminal (200) further comprising
a display unit (240) configured to display the execution result of the core code on a screen.

3. The system of claim 1, wherein the unique information of the user terminal (200) includes an international mobile equipment identity, IMEI.

4. A core code protective method using a user terminal (200) and a peripheral device (300), comprising:
a step (S430) in which the user terminal (200) receives a general code of the application program when the application program downloaded from an application program store server (100) is installed;
a step in which the user terminal (200) performs pairing connection with a peripheral device (300) where a core code of the application program transmitted from the application program store server (100) is stored;
a step (S440) in which the user terminal (200) transmits its unique information to the paired peripheral device (300) ;
a step (S450) in which the peripheral device (300) encodes the core code when the application program is first executed;
a step (S460) in which the user terminal (200) transmits its unique information to the peripheral device (300) ;
a step (S470) in which the peripheral device (300) decodes the encoded core code when the application program is re-executed; and
a step in which the user terminal (200) transmits (S480) an execution-calling message to the peripheral device (300) and receives (S500) an execution result of the core code from the peripheral device (300),
wherein the peripheral device (300) encodes (S450) the core code by using the unique information of the user terminal (200) when a request for execution of the application program is first inputted, and then stores the encoded core code, and
wherein the peripheral device (300) decodes (S470) the encoded core code by using unique information of the user terminal (200) when a request for re-execution of the application program is inputted, executes (S490) the decoded core code, and transmits (S500) an execution result of the decoded core code to the user terminal (200).

5. The core code protective method of claim 4, further comprising a step in which the user terminal (200) displays the execution result of the core code on a screen.

6. The core code protective method of claim 4, wherein the unique information of the user terminal (200) includes an international mobile equipment identity, IMEI.

## Patentansprüche

1. System mit einem Benutzerendgerät (200) und einem Peripheriegerät (300), wobei das Benutzerendgerät (200) umfasst:
eine Kopplungseinheit (210), die dazu eingerichtet ist, einen allgemeinen Code eines Applikationsprogramms zu empfangen, wenn das von einem Applikationsprogramm-Store-Server (100) geladene Applikationsprogramm installiert wird, und eine Kopplungsverbindung mit dem Peripheriegerät (300) durchzuführen, in welchem ein von dem Applikationsprogramm-Store-Server (100) übertragener Kerncode des Applikationsprogramms gespeichert ist;
eine Kommunikationseinheit (220), die dazu eingerichtet ist, eindeutige Information über das Benutzerendgerät (200) an das gekoppelte Peripheriegerät (300) zu übertragen, wenn eine Anforderung nach Ausführung des Applikationsprogramms eingegeben wird; und
eine Steuereinheit (230), die dazu eingerichtet ist, eine Ausführungsaufruf-Nachricht an das Peripheriegerät (300) zu übertragen und ein Ausführungsergebnis des Kerncodes von dem Peripheriegerät (300) zu empfangen,
wobei das Peripheriegerät (300) dazu eingerichtet ist, den Kerncode unter Verwendung der eindeutigen Information des Benutzerendgeräts (200) zu codieren, wenn eine Anforderung nach Ausführung des Applikationsprogramms erstmalig eingegeben wird, und den codierten Kerncode zu speichern, und
wobei das Peripheriegerät (300) dazu eingerichtet ist, den codierten Kerncode unter Verwendung einer eindeutigen Information des Benutzerendgeräts (200) zu decodieren, wenn eine Anforderung nach erneuter Ausführung des Applikationsprogramms eingegeben wird, den decodierten Kerncode auszuführen, und ein Ausführungsergebnis des decodierten Kerncodes an das Benutzerendgerät (200) zu übertragen.

2. System nach Anspruch 1, wobei das Benutzerendgerät (200) ferner eine Anzeigeeinheit (240) umfasst, die dazu eingerichtet ist, das Ausführungsergebnis des Kerncodes auf einem Bildschirm auszugeben.

3. System nach Anspruch 1, wobei die eindeutige Information des Benutzerendgeräts (200) eine International Mobile Equipment Identity, IMEI, umfasst.

4. Verfahren zum Schützen von Kerncode unter Verwendung eines Benutzerendgeräts (200) und eines Peripheriegeräts (300), umfassend:
einen Schritt (S430), bei welchem das Benutzerendgerät (200) einen allgemeinen Code des Applikationsprogramms empfängt, wenn das von einem Applikationsprogramm-Store-Server (100) geladene Applikationsprogramm installiert wird;
einen Schritt, in welchem das Benutzerendgerät (200) eine Kopplungsverbindung mit einem Peripheriegerät (300) durchführt, wo ein von dem Applikationsprogramm-Store-Server (100) übertragener Kerncode des Applikationsprogramms gespeichert ist;
einen Schritt (S440), bei welchem das Benutzerendgerät (200) seine eindeutige Information an das gekoppelte Peripheriegerät (300) überträgt;
einen Schritt (S450), bei welchem das Peripheriegerät (300) den Kerncode codiert, wenn das Applikationsprogramm erstmalig ausgeführt wird;
einen Schritt (S460), bei welchem das Benutzerendgerät (200) seine eindeutige Information an das Peripheriegerät (300) überträgt;
einen Schritt (S470), bei welchem das Peripheriegerät (300) den codierten Kerncode decodiert, wenn das Applikationsprogramm erneut ausgeführt wird; und
einen Schritt, in welchem das Benutzer-Endgerät (200) eine Ausführungsaufruf-Nachricht an das Peripheriegerät (300) überträgt (S480) und ein Ausführungsergebnis des Kerncodes von dem Peripheriegerät (300) empfängt (S500),
wobei das Peripheriegerät (300) den Kerncode unter Verwendung der eindeutigen Information des Benutzerendgeräts (200) codiert (S450), wenn eine Anforderung nach Ausführung des Applikationsprogramms erstmalig eingegeben wird, und dann den codierten Kerncode speichert, und wobei
das Peripheriegerät (300) den codierten Kerncode unter Verwendung einer eindeutigen Information des Benutzerendgeräts (200) decodiert (S470), wenn eine Anforderung nach erneuter Ausführung des Applikationsprogramms eingegeben wird, den decodierten Kerncode ausführt (S490), und ein Ausführungsergebnis des decodierten Kerncodes an das Benutzerendgerät (200) überträgt (S500).

5. Verfahren zum Schützen von Kerncode nach Anspruch 4, ferner umfassend einen Schritt, in welchem das Benutzerendgerät (200) das Ausführungsergebnis des Kerncodes auf einem Bildschirm ausgibt.

6. Verfahren zum Schützen von Kerncode nach Anspruch 4, wobei die eindeutige Information des Benutzerendgeräts (200) eine International Mobile Equipment Identity, IMEI, umfasst.

## Revendications

1. Système comprenant un terminal d'utilisateur (200) et un dispositif périphérique (300),
dans lequel le terminal d'utilisateur (200) comprend :
une unité d'association (210) configurée pour recevoir un code général d'un programme d'application lorsque le programme d'application téléchargé à partir d'un serveur de magasin de programme d'application (100) est installé, et effectuer une connexion d'association avec le dispositif périphérique (300) dans lequel un code de base du programme d'application transmis à partir du serveur de magasin de programme d'application (100) est mémorisé ;
une unité de communication (220) configurée pour transmettre une information unique du terminal d'utilisateur (200) au dispositif périphérique associé (300) lorsqu'une demande d'exécution du programme d'application est entrée ; et
une unité de commande (230) configurée pour transmettre un message d'appel d'exécution au dispositif périphérique (300) et recevoir un résultat d'exécution du code de base provenant du dispositif périphérique (300),
dans lequel le dispositif périphérique (300) est configuré pour coder le code de base en utilisant l'information unique du terminal d'utilisateur (200) lorsqu'une demande pour l'exécution du programme d'application est entrée en premier et mémoriser le code de base codé et
dans lequel le dispositif périphérique (300) est configuré pour décoder le code de base codé en utilisant une information unique du terminal d'utilisateur (200) lorsqu'une demande pour l'exécution du programme d'application est entrée, exécuter le code de base décodé et transmettre un résultat d'exécution du code de base décodé au terminal d'utilisateur (200).

2. Système selon la revendication 1, le terminal d'utilisateur (200) comprenant en outre une unité d'affichage (240) configurée pour afficher le résultat d'exécution du code de base sur un écran.

3. Système selon la revendication 1, dans lequel l'information unique du terminal d'utilisateur (200) inclut une identité d'équipement mobile internationale, IMEI.

4. Procédé de protection de code de base utilisant un terminal d'utilisateur (200) et un dispositif périphérique (300), comprenant :
une étape (S430) dans laquelle le terminal d'utilisateur (200) reçoit un code général du programme d'application lorsque le programme d'application téléchargé à partir d'un serveur de magasin de programme d'application (100) est installé ;
une étape dans lequel le terminal d'utilisateur (200) exécute une connexion d'association avec un périphérique (300) ou un code de base du programme d'application transmis à partir du serveur de magasin de programme d'application (100) est mémorisé ;
une étape (S440) dans laquelle le terminal d'utilisateur (200) transmet son information unique au dispositif périphérique associé (300) ;
une étape (S450) dans laquelle le dispositif périphérique (300) code le code de base lorsque le programme d'application est exécuté en premier ;
une étape (S460) dans laquelle le terminal d'utilisateur (200) transmet son information unique au dispositif périphérique (300) ;
une étape (S470) dans laquelle le dispositif périphérique (300) décode le code de base codé lorsque le programme d'application est réexécuté ; et
une étape dans laquelle le terminal d'utilisateur (200) transmet (S480) un message d'appel d'exécution au dispositif périphérique (300) et reçoit (S500) un résultat d'exécution du code de base provenant du dispositif périphérique (300),
dans lequel le dispositif périphérique (300) code (S450) le code de base en utilisant l'information unique du terminal d'utilisateur (200) lorsqu'une demande d'exécution du programme d'application est entrée en premier, et mémorise ensuite le code de base codé, et
dans lequel le dispositif périphérique (300) décode (S470) le code de base codé en utilisant une information unique du terminal d'utilisateur (200) lorsqu'une demande d'exécution du programme d'application est entrée, exécute (S490) le code de base décodé et transmet (S490) un résultat d'exécution du code de base décodé au terminal d'utilisateur (200).

5. Procédé de protection de code de base selon la revendication 4, comprenant en outre une étape dans laquelle le terminal d'utilisateur (200) affiche le résultat d'exécution du code de base sur un écran.

6. Procédé de protection de code de base selon la revendication 4, dans lequel l'information unique du terminal d'utilisateur (200) inclut une identité d'équipement mobile internationale, IMEI.
